# EUROPEAN PATENT SPECIFICATION

(11) **EP 3 421 164 B1**
(45) Date of publication and mention of the grant of the patent: **22.04.2020**
(21) Application number: 17462001.3
(22) Date of filing: 27.06.2017
(51) Int. Cl.: B23H 9/00, B23H 1/00

(54) **METHOD FOR MICRO-ELECTRO-DISCHARGE MACHINING OF CERAMIC WORKPIECES**
VERFAHREN ZUM MIKROELEKTROERODIEREN EINES KERAMIKWERKSTÜCKS
PROCÉDÉ D'USINAGE PAR MICRO-ÉLECTROÉROSION DE PIÈCES EN CÉRAMIQUE

(43) Date of publication of application: 02.01.2019
(73) Proprietor: MTA Számítástechnikai és Automatizálási Kutató Intézet, 1111 Budapest (HU)
(72) Inventor: Viharos, Zsolt János, H-2400 Dunaújváros (HU); Kis, Krisztián Balázs, H-5624 Doboz (HU); Paniti, Imre, H-1221 Budapest (HU); Farkas, Balázs, H-2030 Érd (HU); Csorba, László, H-1095 Budapest (HU); Szalay, Tibor, H-1042 Budapest (HU); Czampa, Miklós, H-2454 Iváncsa (HU)
(74) Representative: Harangozo, Gabor

(56) References cited:
- US-B2- 8 138 442
- GOKHAN KUCUKTURK ET AL: "A NEW METHOD FOR MACHINING OF ELECTRICALLY NONCONDUCTIVE WORKPIECES USING ELECTRIC DISCHARGE MACHINING TECHNIQUE", MACHINING SCIENCE AND TECHNOLOGY, vol. 14, no. 2, 17 August 2010 (2010-08-17), pages 189-207, XP055429320, US ISSN: 1091-0344, DOI: 10.1080/10910344.2010.500497
- Dr Zsolt ET AL: "INTEGRATED EXPERIMENTAL DESIGN AND PARAMETER OPTIMIZATION UNDER UNCERTAIN PROCESS CIRCUMSTANCES", , 20 November 2015 (2015-11-20), XP055429165, Retrieved from the Internet: URL:http://eprints.sztaki.hu/8417/1/Viharo s_1_2971169_ny.pdf [retrieved on 2017-11-27]

## Description

The present invention relates to a method for Micro-Electro-Discharge Machining according to the preamble of claim 1 in which a ceramic workpiece is arranged in a Micro-Electro-Discharge Machine, the parameters of Micro-Electro-Discharge Machining are adjusted according to the intended machining and the ceramic workpiece is machined using the pre-set Micro-Electro-Discharge Machining parameters.

Electro-Discharge-Machining (EDM) is based on the destructive effect of electrical spark discharge. Electrically conductive electrodes (tool and workpiece) connected to Direct Current (DC) voltage are immersed in dielectric material (insulating liquid, work fluid) and discharging sequences are created between the electrodes. As a result, one of the electrodes (workpiece) creates a copy of the other electrode (tool).

An essential precondition for the material removal is to avoid the formation of a continuous arc between the two electrodes. Between the two electrodes, the discharge can only be achieved if the following conditions are jointly met:
- The two electrodes do not contact each other, but their maximum distance is so high that the voltage between them can puncture the electrical insulation strength of the dielectric filler. Not DC voltage is connected to the electrode, but voltage impulses are applied.
- The distance between the two electrodes, namely the gap, is constant during machining, usually controlled by a feed- or gap-control device.

Simultaneously, one and only one discharge takes place, and is always located between the actual closest points of the electrodes, since the electrical field strength is the strongest here. The discharge frequency is between 2000 and 500000 s⁻¹, for this reason it may look like that the arc discharge is generated at several points, simultaneously, but this is only an optical illusion.

If there were a continuous electric arc between the two points of the electrodes, the electric discharge could not "go further" to any other location, so the material removal would fail. Therefore, it is important for the discharge to remain for a limited period of time; otherwise, the permanent heat would cause extensive damage, so-called burn-ins on the surface of the workpiece. The discharge channel can only collapse if the power supply is interrupted from time to time. In order to avoid two consecutive discharges at the same place, the dielectric which has become a conductor, must, - at least partially - de-ionise to regain its original insulating properties. The time required for this depends on the type of work fluid, its contamination and the amount of transforming energy. As a result, the discharge machining becomes a machining process with the series of controlled discharges.

EDM consists of two sub-processes: the material removal process and continuously flushing the detached particles from the space between the electrodes. At the material removal stage, the electrical energy of the discharge is being converted into thermal energy, which melts and removes material particles. The continuous ablation of the removed materials is caused by hydrodynamic effects of shock waves generated during the collapse of the discharge channel. Without this effect, the electric discharge process would discontinue sooner or later. Therefore, continuous flushing should be maintained to aid this effect.

In the case of electric discharge machining of metals, all of the above mentioned ascertainments are entirely correct, furthermore, the criteria and physical phenomenon respecting the establishment of electric discharge, is true for ceramic materials, as well. However, the latter case requires an extension. In the case of ceramic material, the electric discharge can only be established between conducting particles. Consequently, the electric discharges are not necessarily established between the closest parts of the material (if they are non-conductors). This becomes an extra challenge for keeping the discharge gap at an ideal value, especially in the case of micro-EDM. Furthermore, another important difference is that in the case of ceramics, there are other material removal modes in play beyond melting/vaporizing, like thermic exfoliation, oxidation, etc. These phenomena can generate a harmful effect on the electric discharge process.

A special field of EDM is micro-EDM. The physical process, features of this are very similar to the "conventional", e.g. macro scale EDM. However, micro-EDM is not only a simple minification of the macro level process, there are significant differences, too. In the case of micro-EDM the electrode is much smaller and is produced through a different method.

Besides the electrode (which was produced by wire-EDM), the generator type used in the machining process is also different, furthermore the axis movement is more precise, the discharge gap control and flushing methods are different as well. In the case of Micro-EDM, higher discharge frequency (>200 kHz), smaller discharge energy (10⁻⁶-10⁻⁷ J) is used with the voltage between 40-100 V. With these settings a very good, around 0.1 µm average surface roughness can be achieved. Besides the above mentioned features and differences, the followings should be known, too:
The size of the electric discharge channel is in the same order of magnitude as the diameter of the electrode. Both of them are on a ten micron scale.

The smaller electrodes are significantly lighter and they have limited thermal conducting capabilities. Therefore, they are exposed to more heat. In specific cases, this can lead to the breaking of the electrode. This limited heat tolerance of the electrode restricts the maximum of the applicable discharge energy.

The flushing conditions are less ideal when using micro-EDM and the removal of detached particles is harder as well. The discharge gap is significantly smaller, and the viscosity of the dielectric fluid is relatively high. Furthermore, the pressure fluctuation caused by the formations and collapses of steam bubbles is relatively high. These fluctuations affect smaller surfaces, the rigidity of the electrode is significantly lower as well, consequently this phenomenon together with the increased thermal load pose a substantial threat to the electrode, causing it to bend or break more easily.

Higher size and shape accuracy can be achieved with micro-EDM.

The electrode wear per discharge is relatively higher with micro-EDM.

Another reason for restricting the maximum discharge energy is that the material removal effect of electric discharge shall be remaining controllable. Consequently, the crater formed during an electric discharge is significantly smaller, than in the case of macro-EDM. This causes the material removal process to be relatively slow. However, the crater diameter can be reduced to the magnitude of nanometres by using a optimally selected generator type, which results in a highly accurate machining.

Compared to the homogene, highly conductive metals, when machining ceramics by micro-EDM, the size of material particles is rather crucial from the perspective of successful machining. If the particle diameter is too big for the selected discharge energy and channel, then the material removal can fail.

US 8,138,442 B2 discloses Wire EDM of -materials with high relative resistance (semiconductors) and also the preamble of independent claim 1. The electrical conductivity of the workpieces, which can be machined by applying the determined technological parameters of the method, are 2-0.2 ohm⁻¹cm⁻¹. The proposed values of the technological parameters are determined by a set of experiments in which, apart from the referenced parameters, additional parameters, e.g. repetition frequency, are also varied. The most preferred cases are the parameter settings resulting the highest machining speed. The document also refers to the quality properties of the machined surfaces, but only from the aspect that with the help of Electro Discharge Machining, a concave / convex texture can be formed on the surface of semiconductor pellets, which reduces the reflectivity of the surface.

GB 2106541 A discloses a device and method for machining non-conductive materials by EDM. The essence of the apparatus is to alternately create electrically conductive and non-conductive areas on a rotatable wheel mantle where the non-conducting layer is an abrasive material. The essence of the apparatus is to alternately create electrically conductive and non-conductive areas on the meridional plane of a rotatable wheel where the non-conducting layer is an abrasive material. The rotated wheel and the workpiece are immersed in an electrolyte and voltage is applied between them causing discharges between the conductive layer and the workpiece and the molten material is being removed by the non-conductive layer during rotation. The applied voltage is 5-100 V (with direct or alternating current), and the frequency is 50-50000 Hz. The procedure can also be applied to ceramics when the voltage is 5-20 V under the alternating current and the frequency is 50-500 Hz. Values of the mentioned technological parameters are determined in a series of experiments. The described procedure does not refer to a specific conductivity test, the possible values of the discharge gap parameter, or the analysis of the shape's geometrical correctness, so the document does not provide any instruction or guidance for ascertaining the unknown properties and features.

JP 2006263891 A discloses a Wire EDM device and method for machining ceramics. In the presented method, the clamped workpiece is illuminated by a light source between the clamping electrodes and the wire to reduce the electrical resistance of the insulating ceramic and enable electrical discharge machining. To enhance machinability, the illuminated area is also heated. Conductivity measurements were also performed on SiC material for this purpose.

In the case of JP 2006082192 A the same solution is applied, they reduce the electrical resistance of the ceramic workpiece by illuminating the workpiece between the wire and the electrodes contacting the workpiece and heating the workpiece for machinability.

JP 2012030330 A discloses an electric discharge machining method, and device for machining insulating or semiconductor materials by reducing electrode tool wear. The essence of the process is that the polarity of the applied voltage is changed at regular intervals. As part of the method, they optimized the duration of the positive and negative polarities and their ratio furthermore, they tested multiple materials as electrode.

EP 0280059 B1 discloses an EDM method, and device for machining non-conductive or low conductivity materials. The essence of the process is that materials with poor conductivity are made conductive by energy transfer, e.g. laser, infrared radiation. The document does not disclose or suggest any test that could lead to a conclusion that a non-conductive ceramic is suitable for micro-EDM at all.

EP 0597122 A1 discloses a device for EDM machines to test whether there is an insulated condition between the wire and the workpiece. According to this description, this test is not related to the EDM machinability of the workpiece, but ensures the proper operation of the EDM machine by checking the insulation recovered by the dielectric between two discharges.

CN 101185983 A discloses a device suitable for EDM of non-conducting materials. The description only shows a technological arrangement where the two electrodes of the apparatus are arranged coaxially, including dielectric material between them. During machining, conductive fluid is injected onto the workpiece surface through the hole inside the internal electrode. The description does not address the analysis of EDM machinability of non-conductive materials or the optimisation of technological parameters.

CN 201511193 U discloses an apparatus for machining non-conducting materials by EDM. The description briefly describes the relevant technology, mentioning that the impulse duration should be kept within 10 seconds, but does not provide information regarding the optimisation of technological parameters.

CN 105215487 A discloses an apparatus based on a combined process for machining non-conductive and brittle materials with EDM. During the EDM process, ultrasonic vibrations, high rotation electrode and electrolysis are applied. During electrolysis, the rotatable electrode and the auxiliary electrode are immersed in an electrolyte from which hydrogen develops on the surface of the rotatable electrode. The description does not disclose the examination of EDM machinability of ceramic materials or the optimisation of related technological parameters.

US 8,269,132 B2 discloses a method for EDM of electrically non-conductive materials. As part of the process, a conductive layer is formed as auxiliary electrode on the surface of the non-conducting workpiece, which is chemically transformed by oxidation during machining and it escapes as a gas or it remains on the surface deposited e.g. transformed into metal oxide. The non-conducting materials can be, for example, ceramics containing metal oxides. The document does not mention the optimisation of the technological parameters, nor the analysis of the ability to perform EDM.

EP 1837113 A1 discloses a technological arrangement for EDM of ceramics. According to the solution, the workpiece is coated with graphite as auxiliary electrode. The working electrode consists of two parts: a consumable electrode and a coating. The document does not mention the optimisation of the technological parameters, nor the analysis of the ability to perform EDM.

WO 2009118210 A1 discloses a solution for the machining of ceramics by EDM. The essence of the presented invention is that at least the part of the workpiece that is being machined is heated until the material becomes electrically conductive so that EDM can be realised. The applied temperature, e.g. in case of zirconia-containing materials, is higher than 800 °C. However, the document does not describe the optimisation of the technological parameters concerning the investigated technical solution.

Patent documents EP 1839794 A1 and EP 1870189 A1 disclose technological arrangements for machining electrically insulating materials by EDM. The working electrode consists of a single material, the dielectric between the working electrode and the auxiliary electrode is transformed to cracking products due to the discharge and the resulting products form a conductive layer deposited on the workpiece surface. This deposition is promoted by an electromagnetic field, furthermore a pre-hole is formed on the workpiece e.g. by laser, then an electrically conductive material (e.g. graphite or some organic material) is inserted into the bore and then EDM is performed. The documents do not describe the optimisation of the technological parameters concerning the investigated technical solution.

The above mentioned documents, which serve only as examples, mirror that the range of ceramic materials that can be machined by micro-EDM, is considered to be known - presumably based on earlier technical experiences - by the experts of the field, furthermore they propose different preparational and auxiliary processes to avert this problem. This attitude and the varying proposed techniques significantly restrict the range of ceramics to be considered machinable and actually machined, which is a rather disadvantageous restriction, knowing the existing ceramic materials and it is also a negative trend economically.

The task to be solved by this invention is to realize micro-EDM in the case of such ceramic materials, which were categorized as non-conductive by the current technical stand, furthermore to define the practical applicability of such machining.

After studying the literature of this field and analysing the results of the performed experiments designed to prove our concepts, we recognized, that beside the - according to the current technical stand - EDM and micro-EDM machinable ceramics, there are other ceramic materials that can be machined, as long as we introduce an extra step before the actual micro-EDM process, in which we gather micro-EDM specific information about the ceramic workpiece to be machined.

Based on this recognition, we solved the defined task with a method described in the 1. claim. As part of the proposed method, we setup a ceramic workpiece in a micro-EDM machine, we set the technological parameters of the micro-EDM considering the predefined machining properties, we execute the machining of the ceramic workpiece by applying the set micro-EDM parameters, and applying a novel approach, before setting up the ceramic workpiece in the micro-EDM machine, we perform a suitability analysis on a test piece having the same material as the workpiece, when during this analysis, we ascertain the electrical conductivity of the test piece, and if the analysed test piece has 10⁻²-10⁻⁶ ohm⁻¹cm⁻¹ conductivity, then we perform preliminary machining experiments on the test piece to manufacture at least one geometrical shape using the no-load erosion voltage, maximum discharge current, frequency, impulse duration, discharge gap setting parameters of the micro-EDM machine from predefined intervals (defined by the available machines), we evaluate the results of the preliminary machining series from the aspect e.g. of geometrical correctness or one of further predefined quality measures and based on the result of the evaluation, we classify the test pieces as machinable or non-machinable, and if one or more test pieces were classified as machinable, then we define and set technical parameter intervals coupled with the planned machining of the ceramic workpiece, and we machine the ceramic workpiece by applying a parameter setting inside the defined parameter intervals.

The main advantageous versions of the method - in a non-restrictive way - are defined in the dependent claims. Based on this, in the course of forming a ceramic test piece which consists of at least one slot, we machine a favourable V shaped slot.

Furthermore, it is ideal for the invention, if we set the no-load erosion voltage setting parameter of the micro-EDM machine, between the 80-130 V intervals when executing the preliminary machining series of the ceramic test piece consisting of at least one slot.

Furthermore, it is also ideal for the invention, if we set the maximum discharge current setting parameter of the micro-EDM machine, between the 5-52 A intervals when executing the preliminary machining series of the ceramic test piece consisting of at least one slot.

Furthermore, it is also ideal for the invention, if we set the frequency setting parameter of the micro-EDM machine, between the 100-150 kHz intervals when executing the preliminary machining series of the ceramic test piece consisting of at least one slot.

Furthermore, it is also ideal for the invention, if we set the discharge duration setting parameter of the micro-EDM machine, between the 0.5-5.6 µs intervals when executing the preliminary machining series of the ceramic test piece consisting of at least one slot.

Furthermore, it is also ideal for the invention, if we set the discharge gap setting parameter of the micro-EDM machine, between the 50-119 V intervals when executing the preliminary machining series of the ceramic test piece consisting of at least one slot.

The following part illustrates a real experimental process realized according to the steps of the introduced invention.

In this example, parameters describing the process are typically called as technological parameters, while parameters describing the quality of the process and the end product are called quality features.

Technological parameters of the machining are divided into three groups: material removal parameters, milling parameters and material parameters.
a) The first group is the material removal parameters, which are used to control the electric discharge:
   No-load erosion voltage: this is the base voltage of the machine while there is no material removal,
   Maximal discharge current: it is the current during the material removal,
   Frequency: frequency of the discharge,
   Impulse time: length of one discharge.
b) Milling parameters form the physical set-up parameters of the EDM milling:
   Layer thickness: depth of one layer of material removal,
   Movement overlapping: overlapping of the milling paths,
   Electrode diameter: diameter of the machining tool electrode.
c) Material parameters describe the workpiece material:
   Composition: different materials/components inside the material,
   Particle size: average geometrical size of one granulate,
   Ratio of conductive and non-conductive particles: this is the ratio of the conductive and non-conductive components(granulates) inside the material, which is very important when machining not fully conductive materials.

According to the aspects for certain decisions the important (process) performance measures are used to describe the quality of the machining. Such measurable parameters are, e.g.:
- Tool wear of the electrode: during milling the machine is able to measure and store it automatically,
- Material removal rate: it is calculated and stored after each cutting process, it is not possible to measure its actual value during the process,
- Machining time: it is stored automatically by the machine at the end of the cutting process,
- Rounding of the cutting tool: it is the geometrical rounding of the tool edge, that is measurable after the material removal process,
- Surface roughness: roughness of the machined surface, that is measurable either by microscope or by taster running through the surface, the latter is not possible now, because of the micro-machining and the isotropy of the surface,
- Thickness of the material layer receiving the main heat shock: based on metallographic principle it is measurable after a cutting process and an abrasive finishing of the workpiece followed by microscope analysis.
- Width of the surface cracks: its measuring is together with the previous step.

During our experiments the ceramic workpiece conductivity was measured with Agilent 34401A digital multimeter at 12 mm length of the workpiece. The relative resistance was measured in one direction for 100 Ω and in the opposite direction for 10 Ω which reflects a semiconductor material. According to this measurement, considering the unfavourable case of 100 Ω the relative conductivity is calculated to be 8,3^{∗}10⁻³ ohm⁻¹cm⁻¹ which orders the workpiece into the semiconductive material group. Based on this results the following technological and set-up parameters were applied:
- No-load erosion voltage: 80-130 V
- Maximal discharge current: 5-52 A
- Frequency: 100-150 kHz
- Impulse time: 0,5-5,6 µs
- Discharge gap: 50-119 V
- Layer thickness: 0,5-2 µm
- Compensation index of electrode tool wearing: 0.01-0.1. This index is used to compensate the wearing of the electrode tool, it specifies the manner of moving the tool into the direction of the workpiece while the tool manufactures one unit of path (because during the machining process the electrode tool will also be shorter because of the wearing effect).

Constant parameters of the applied Sarix SX-100 EDM machine:
- Planned depth of the slot: 30 µm,
- Electrode tool diameter: 0,1 mm,
- Energy level (on the machine): 0,1 mm,
- Polarity: negative.

In these ranges a linear and a non-linear experiment set was performed to manufacture the selected, general 3D geometry. This can be a hole, slot, etc., such a geometry is proposed that is deterministic in the given practical application. In this example a V form slot was applied with 2 x 2 mm long legs, where the two legs of this V slot close (a small) 10° angle with each-other.

In the linear experimental set, 2 instances of L8 Taguchi orthogonal experimental tests/machining set-ups were applied, its parameters are presented in Tables 1. and 2. The Taguchi type experimental design is a well-known methodology, its details are to be found e.g. in the following book:
Ranjit K. Roy: Design of Experiments Using The Taguchi Approach: 16 Steps to Product and Process Improvement, A Wiley-Interscience Publication, John Wiley & Sons, INC., New York, April 2001, ISBN: 978-0-471-36101-5, 560 p.

**Table 1**

| Experiment index | Experiment identifier | No-load erosion voltage [V] | Maximal discharge current [-] [the unit is A, but on the given machine is had a special unitless set-up value] | Frequency [kHz] | Impulse time [µs] | Discharge gap [V] | Layer thickness [um] | Compensation index [-] |
|---|---|---|---|---|---|---|---|---|
| 1 | 37 | 105 | 28.5 | 125 | 3.05 | 57.5 | 1.25 | 0.055 |
| 2 | 38 | 105 | 28.5 | 150 | 3.05 | 65 | 2 | 0.1 |
| 3 | 39 | 105 | 52 | 125 | 5.6 | 65 | 1.25 | 0.1 |
| 4 | 40 | 105 | 52 | 150 | 5.6 | 57.5 | 2 | 0.055 |
| 5 | 41 | 130 | 28.5 | 125 | 5.6 | 65 | 2 | 0.055 |
| 6 | 42 | 130 | 28.5 | 150 | 5.6 | 57.5 | 1.25 | 0.1 |
| 7 | 43 | 130 | 52 | 125 | 3.05 | 57.5 | 2 | 0.1 |
| 8 | 44 | 130 | 52 | 150 | 3.05 | 65 | 1.25 | 0.055 |

**Table 2**

| Experiment index | Experiment identifier | No-load erosion voltage M | Maximal discharge current [-] | Frequency [kHz] | Impulse time [µs] | Discharge gap M | Layer thickness [um] | Compensation index [-] |
|---|---|---|---|---|---|---|---|---|
| 1 | 45 | 80 | 5 | 100 | 0.5 | 50 | 0.5 | 0.01 |
| 2 | 46 | 80 | 5 | 125 | 0.5 | 57.5 | 1.25 | 0.055 |
| 3 | 47 | 80 | 28.5 | 100 | 3.05 | 57.5 | 0.5 | 0.055 |
| 4 | 48 | 80 | 28.5 | 125 | 3.05 | 50 | 1.25 | 0.01 |
| 5 | 49 | 105 | 5 | 100 | 3.05 | 57.5 | 1.25 | 0.01 |
| 6 | 50 | 105 | 5 | 125 | 3.05 | 50 | 0.5 | 0.055 |
| 7 | 51 | 105 | 28.5 | 100 | 0.5 | 50 | 1.25 | 0.055 |
| 8 | 52 | 105 | 28.5 | 125 | 0.5 | 57.5 | 0.5 | 0.01 |

The above mentioned, non-linear experimental plan parameters are shown in Table 3., it was performed according to the methodology introduced in the following scientific publication:
Viharos, Zs. J.; Kis K. B.: Integrated Experimental design and parameter optimization under uncertain process circumstances, XXI IMEKO World Congress "Measurement in Research and Industry", August 30 - September 4, 2015, Prague, Czech Republic, ISBN 978-80-01-05793-3, pp. 1219 - 1224.

**Table 3**

| Experiment index | Experiment identifier | No-load erosion voltage [V] | Maximal discharge current [-] | Frequency [kHz] | Impulse time[µs] | Discharge gap [V] | Layer thickness [um] | Compensation index [-] |
|---|---|---|---|---|---|---|---|---|
| 1 | 59 | 108 | 29 | 126 | 3.8 | 95 | 1.1 | 0.025 |
| 2 | 60 | 118 | 32 | 102 | 5.1 | 66 | 1.4 | 0.055 |
| 3 | 61 | 124 | 27 | 127 | 2.5 | 74 | 1.3 | 0.038 |
| 4 | 62 | 115 | 8 | 148 | 0.7 | 85 | 1.9 | 0.072 |
| 5 | 63 | 90 | 6 | 144 | 5.4 | 74 | 0.7 | 0.068 |
| 6 | 64 | 117 | 35 | 123 | 2.8 | 79 | 1.9 | 0.06 |
| 7 | 65 | 128 | 17 | 123 | 4.9 | 79 | 0.9 | 0.078 |
| 8 | 66 | 100 | 24 | 141 | 1.3 | 70 | 1.8 | 0.059 |
| 9 | 67 | 108 | 27 | 107 | 5.2 | 98 | 1.2 | 0.068 |
| 10 | 68 | 121 | 43 | 117 | 4.1 | 80 | 1 | 0.057 |
| 11 | 69 | 93 | 35 | 116 | 5.4 | 55 | 1.2 | 0.033 |
| 12 | 70 | 115 | 19 | 113 | 2.8 | 67 | 0.8 | 0.034 |
| 13 | 71 | 98 | 50 | 110 | 1.4 | 62 | 0.7 | 0.044 |
| 14 | 72 | 96 | 41 | 143 | 1.1 | 72 | 0.6 | 0.079 |
| 15 | 73 | 115 | 39 | 143 | 1.9 | 91 | 0.8 | 0.057 |
| 16 | 74 | 112 | 26 | 102 | 2.5 | 90 | 1.1 | 0.05 |
| 17 | 75 | 93 | 10 | 138 | 0.9 | 79 | 1.1 | 0.092 |
| 18 | 76 | 100 | 25 | 145 | 3.5 | 64 | 0.8 | 0.033 |
| 19 | 77 | 102 | 31 | 137 | 3.4 | 84 | 1.5 | 0.095 |
| 20 | 78 | 90 | 41 | 104 | 3 | 63 | 1.6 | 0.051 |
| 21 | 79 | 125 | 18 | 114 | 1.1 | 90 | 0.5 | 0.095 |
| 22 | 80 | 127 | 11 | 139 | 2.5 | 96 | 1.1 | 0.08 |
| 23 | 81 | 88 | 28 | 120 | 4.9 | 72 | 1.6 | 0.08 |
| 24 | 82 | 122 | 5 | 145 | 0.8 | 60 | 0.9 | 0.056 |
| 25 | 83 | 102 | 22 | 138 | 2.3 | 82 | 1.2 | 0.038 |
| 26 | 84 | 98 | 18 | 118 | 5.2 | 72 | 1 | 0.066 |
| 27 | 85 | 106 | 25 | 113 | 2.4 | 72 | 1.4 | 0.044 |
| 28 | 86 | 96 | 32 | 134 | 4.2 | 77 | 1.8 | 0.037 |
| 29 | 87 | 118 | 9 | 115 | 2 | 78 | 1.3 | 0.098 |
| 30 | 88 | 106 | 36 | 126 | 2.9 | 91 | 1.5 | 0.064 |
| 31 | 89 | 111 | 11 | 123 | 3.2 | 82 | 1.1 | 0.057 |
| 32 | 90 | 110 | 28 | 129 | 3.8 | 78 | 1.3 | 0.06 |
| 33 | 91 | 87 | 40 | 131 | 0.7 | 61 | 1.3 | 0.051 |
| 34 | 92 | 99 | 7 | 108 | 4 | 83 | 1.7 | 0.059 |
| 35 | 93 | 100 | 49 | 127 | 3.3 | 69 | 0.9 | 0.052 |
| 36 | 94 | 115 | 20 | 133 | 2.1 | 67 | 0.9 | 0.066 |
| 37 | 95 | 103 | 47 | 112 | 3.4 | 82 | 1.2 | 0.025 |
| 38 | 96 | 106 | 51 | 143 | 5.5 | 95 | 0.9 | 0.066 |
| 39 | 97 | 94 | 28 | 105 | 2.8 | 83 | 1.1 | 0.081 |
| 40 | 98 | 102 | 50 | 147 | 2.3 | 69 | 1.5 | 0.051 |
| 41 | 99 | 113 | 39 | 121 | 0.5 | 85 | 1.2 | 0.056 |
| 42 | 100 | 83 | 27 | 126 | 2.1 | 64 | 0.7 | 0.046 |
| 43 | 101 | 98 | 35 | 125 | 3 | 80 | 1.3 | 0.043 |
| 44 | 102 | 104 | 7 | 145 | 4.3 | 91 | 1.5 | 0.066 |
| 45 | 103 | 86 | 15 | 119 | 3.4 | 76 | 1.2 | 0.027 |
| 46 | 104 | 106 | 33 | 118 | 2.5 | 82 | 0.5 | 0.06 |
| 47 | 105 | 125 | 47 | 114 | 2.3 | 54 | 1.6 | 0.038 |
| 48 | 106 | 126 | 33 | 118 | 4.2 | 50 | 0.7 | 0.074 |
| 49 | 107 | 95 | 22 | 129 | 3.5 | 71 | 1.4 | 0.053 |
| 50 | 108 | 120 | 14 | 132 | 0.6 | 95 | 0.5 | 0.011 |
| 51 | 109 | 121 | 21 | 133 | 5.2 | 57 | 1.1 | 0.041 |
| 52 | 110 | 95 | 6 | 103 | 0.6 | 70 | 0.6 | 0.071 |
| 53 | 111 | 104 | 31 | 128 | 3.1 | 73 | 1 | 0.057 |
| 54 | 112 | 124 | 19 | 120 | 1.1 | 54 | 1.8 | 0.074 |
| 55 | 113 | 99 | 30 | 116 | 3.3 | 75 | 1.7 | 0.066 |
| 56 | 114 | 128 | 31 | 104 | 1 | 96 | 1.8 | 0.076 |
| 57 | 115 | 104 | 6 | 134 | 5.5 | 83 | 0.7 | 0.016 |
| 58 | 116 | 115 | 18 | 127 | 2.7 | 98 | 1.5 | 0.044 |
| 59 | 117 | 110 | 18 | 118 | 1 | 85 | 1 | 0.026 |
| 60 | 118 | 106 | 15 | 116 | 1 | 92 | 2 | 0.09 |
| 61 | 119 | 117 | 6 | 111 | 4.9 | 74 | 1.5 | 0.03 |
| 62 | 120 | 90 | 43 | 131 | 5.1 | 69 | 1.3 | 0.05 |
| 63 | 121 | 109 | 20 | 114 | 3.6 | 56 | 1.8 | 0.036 |
| 64 | 122 | 92 | 22 | 101 | 2.5 | 78 | 0.5 | 0.014 |
| 65 | 123 | 112 | 38 | 122 | 4.8 | 63 | 1.6 | 0.033 |
| 66 | 124 | 90 | 26 | 119 | 1 | 73 | 1.5 | 0.065 |
| 67 | 125 | 101 | 6 | 126 | 5 | 59 | 1.8 | 0.08 |
| 68 | 126 | 92 | 37 | 144 | 3.6 | 70 | 1.4 | 0.066 |
| 69 | 127 | 125 | 12 | 124 | 4.7 | 88 | 1.9 | 0.089 |
| 70 | 128 | 115 | 13 | 119 | 2.8 | 68 | 1.8 | 0.066 |
| 71 | 129 | 81 | 7 | 148 | 4.1 | 60 | 1.4 | 0.031 |
| 72 | 130 | 118 | 38 | 108 | 1 | 65 | 1 | 0.035 |
| 73 | 131 | 117 | 50 | 114 | 1 | 70 | 1.6 | 0.084 |
| 74 | 132 | 123 | 31 | 149 | 1.2 | 51 | 1.7 | 0.041 |
| 75 | 133 | 106 | 15 | 121 | 0.9 | 82 | 1.8 | 0.041 |
| 76 | 134 | 90 | 35 | 118 | 5.4 | 76 | 0.5 | 0.031 |
| 77 | 135 | 96 | 20 | 142 | 5 | 84 | 1 | 0.047 |
| 78 | 136 | 112 | 48 | 132 | 0.8 | 60 | 1.2 | 0.037 |
| 79 | 137 | 121 | 31 | 125 | 5.2 | 65 | 1.5 | 0.084 |
| 80 | 138 | 117 | 52 | 102 | 1.2 | 99 | 0.7 | 0.018 |
| 81 | 139 | 108 | 37 | 147 | 5.1 | 62 | 1.1 | 0.053 |
| 82 | 140 | 83 | 44 | 118 | 1.9 | 58 | 1.7 | 0.093 |
| 83 | 141 | 86 | 31 | 111 | 4.4 | 75 | 1.1 | 0.05 |
| 84 | 142 | 111 | 14 | 102 | 4.8 | 98 | 0.5 | 0.019 |
| 85 | 143 | 121 | 27 | 144 | 2.6 | 89 | 1.3 | 0.054 |
| 86 | 144 | 100 | 35 | 121 | 1.5 | 77 | 1.1 | 0.065 |
| 87 | 145 | 106 | 25 | 122 | 5.4 | 80 | 1.2 | 0.037 |
| 88 | 146 | 100 | 42 | 128 | 1 | 77 | 0.8 | 0.03 |
| 89 | 147 | 127 | 14 | 110 | 0.6 | 71 | 1.2 | 0.054 |
| 90 | 148 | 104 | 45 | 144 | 4.2 | 91 | 0.6 | 0.022 |
| 91 | 149 | 106 | 44 | 133 | 4.6 | 59 | 1.6 | 0.071 |
| 92 | 150 | 92 | 50 | 124 | 2 | 75 | 1.8 | 0.063 |
| 93 | 151 | 113 | 45 | 140 | 2.9 | 83 | 1.3 | 0.041 |
| 94 | 152 | 101 | 35 | 104 | 3.2 | 55 | 0.9 | 0.043 |
| 95 | 153 | 103 | 37 | 129 | 2.4 | 66 | 1.9 | 0.039 |
| 96 | 154 | 118 | 35 | 142 | 3.3 | 57 | 1.5 | 0.04 |
| 97 | 155 | 94 | 12 | 148 | 1 | 63 | 0.8 | 0.046 |
| 98 | 156 | 114 | 32 | 122 | 2.4 | 79 | 1.3 | 0.067 |
| 99 | 157 | 109 | 34 | 143 | 1 | 70 | 1.2 | 0.073 |
| 100 | 158 | 98 | 18 | 128 | 2.5 | 87 | 1.2 | 0.064 |
| 101 | 159 | 102 | 26 | 121 | 3.4 | 75 | 1.2 | 0.044 |
| 102 | 160 | 126 | 29 | 107 | 3.7 | 88 | 1.5 | 0.076 |
| 103 | 161 | 129 | 5 | 133 | 3.3 | 71 | 0.9 | 0.023 |
| 104 | 162 | 117 | 28 | 144 | 3.9 | 79 | 1 | 0.033 |
| 105 | 163 | 112 | 39 | 108 | 4.8 | 92 | 1.7 | 0.037 |
| 106 | 164 | 87 | 6 | 128 | 2.5 | 67 | 2 | 0.076 |
| 107 | 165 | 108 | 25 | 130 | 3 | 80 | 1.7 | 0.041 |
| 108 | 166 | 115 | 33 | 116 | 4.5 | 79 | 0.6 | 0.021 |
| 109 | 167 | 128 | 49 | 128 | 5.6 | 96 | 1.7 | 0.098 |
| 110 | 168 | 119 | 25 | 143 | 0.8 | 65 | 0.9 | 0.022 |

After performing the experiments, the experimental plan tables are extended with a machinable / not machinable column. In the current example the ordering of the experiments into the machinable / not machinable categories was done based on the finished geometry measured using a microscope. If the planned V form with 2 x 2 mm long slots was established than the machining with the related parameters was ordered into the machinable category. If the planned geometry was not established or only a part of this planned geometry was established, e.g. at one of the slots only a half of the planned slot has formed, or when the machining process cannot be started, only a burn-in hollow is identified, etc., than these cases were ordered into the not machinable category.

For experts of this field the ordering of the experiments into these two categories can be done by many other aspects.

In the following tables two additional information columns are also highlighted, e.g. here visually acceptable / visually not acceptable and with burn-in / without burn-in represent only auxiliary information but the main ordering into the machinable / not machinable is decisive.

At the two L8 type orthogonal Taguchi extended experimental plans are shown in Tables 4-5.:

**Table 4**

| Experiment index | Experiment identifier | No-load erosion voltage [V] | Maximal discharge current [-] | Frequency [kHz] | Impulse time [us] | Discharge gap [V] | Layer thickness [um] | Compensation index [-] | Machinable (1)/Not machinable (0) | Visually acceptable (1)/visually not acceptable (0) | with burn-in (0)/without burn in (1) |
|---|---|---|---|---|---|---|---|---|---|---|---|
| 1 | 37 | 105 | 28.5 | 125 | 3.05 | 57.5 | 1.25 | 0.055 | 1 | 0 | 0 |
| 2 | 38 | 105 | 28.5 | 150 | 3.05 | 65 | 2 | 0.1 | 1 | 1 | 0 |
| 3 | 39 | 105 | 52 | 125 | 5.6 | 65 | 1.25 | 0.1 | 1 | 1 | 1 |
| 4 | 40 | 105 | 52 | 150 | 5.6 | 57.5 | 2 | 0.055 | 1 | 1 | 1 |
| 5 | 41 | 130 | 28.5 | 125 | 5.6 | 65 | 2 | 0.055 | 1 | 0 | 0 |
| 6 | 42 | 130 | 28.5 | 150 | 5.6 | 57.5 | 1.25 | 0.1 | 1 | 1 | 1 |
| 7 | 43 | 130 | 52 | 125 | 3.05 | 57.5 | 2 | 0.1 | 1 | 1 | 1 |
| 8 | 44 | 130 | 52 | 150 | 3.05 | 65 | 1.25 | 0.055 | 1 | 1 | 1 |

**Table 5**

| Experiment index | Experiment identifier | No-load erosion voltage [V] | Maximal discharge current [-] | Frequency [kHz] | Impulse time [us] | Discharge gap [V] | Layer thickness [um] | Compensation index [-] | Machinable (1)/Not machinable (0) | Visually acceptable (1)/visually not acceptable (0) | with burn-in (0)/without burn in (1) |
|---|---|---|---|---|---|---|---|---|---|---|---|
| 1 | 45 | 80 | 5 | 100 | 0.5 | 50 | 0.5 | 0.01 | 0 | 0 | 0 |
| 2 | 46 | 80 | 5 | 125 | 0.5 | 57.5 | 1.25 | 0.055 | 0 | 0 | 0 |
| 3 | 47 | 80 | 28.5 | 100 | 3.05 | 57.5 | 0.5 | 0.055 | 0 | 0 | 0 |
| 4 | 48 | 80 | 28.5 | 125 | 3.05 | 50 | 1.25 | 0.01 | 0 | 0 | 0 |
| 5 | 49 | 105 | 5 | 100 | 3.05 | 57.5 | 1.25 | 0.01 | 1 | 0 | 0 |
| 6 | 50 | 105 | 5 | 125 | 3.05 | 50 | 0.5 | 0.055 | 1 | 1 | 0 |
| 7 | 51 | 105 | 28.5 | 100 | 0.5 | 50 | 1.25 | 0.055 | 1 | 0 | 0 |
| 8 | 52 | 105 | 28.5 | 125 | 0.5 | 57.5 | 0.5 | 0.01 | 0 | 0 | 0 |

The extended table of the non-linear experiments is shown in Table 6.

**Table 6**

| Experiment index | Experiment identifier | No-load erosion voltage [V] | Maximal discharge current [-] | Frequency [kHz] | Impulse time [us] | Discharge gap [V] | Layer thickness [um] | Compensation index [-] | Machinable (1)/Not machinable (0) | Visually acceptable (1)/visually not acceptable (0) | with burn-in (0)/without burn in (1) |
|---|---|---|---|---|---|---|---|---|---|---|---|
| 1 | 59 | 108 | 29 | 126 | 3.8 | 95 | 1.1 | 0.025 | 1 | 1 | 0 |
| 2 | 60 | 118 | 32 | 102 | 5.1 | 66 | 1.4 | 0.055 | 1 | 1 | 0 |
| 3 | 61 | 124 | 27 | 127 | 2.5 | 74 | 1.3 | 0.038 | 1 | 0 | 0 |
| 4 | 62 | 115 | 8 | 148 | 0.7 | 85 | 1.9 | 0.072 | 1 | 0 | 0 |
| 5 | 63 | 90 | 6 | 144 | 5.4 | 74 | 0.7 | 0.068 | 1 | 1 | 0 |
| 6 | 64 | 117 | 35 | 123 | 2.8 | 79 | 1.9 | 0.06 | 1 | 0 | 0 |
| 7 | 65 | 128 | 17 | 123 | 4.9 | 79 | 0.9 | 0.078 | 1 | 1 | 1 |
| 8 | 66 | 100 | 24 | 141 | 1.3 | 70 | 1.8 | 0.059 | 1 | 0 | 0 |
| 9 | 67 | 108 | 27 | 107 | 5.2 | 98 | 1.2 | 0.068 | 1 | 0 | 0 |
| 10 | 68 | 121 | 43 | 117 | 4.1 | 80 | 1 | 0.057 | 1 | 1 | 1 |
| 11 | 69 | 93 | 35 | 116 | 5.4 | 55 | 1.2 | 0.033 | 1 | 0 | 0 |
| 12 | 70 | 115 | 19 | 113 | 2.8 | 67 | 0.8 | 0.034 | 1 | 0 | 0 |
| 13 | 71 | 98 | 50 | 110 | 1.4 | 62 | 0.7 | 0.044 | 1 | 0 | 0 |
| 14 | 72 | 96 | 41 | 143 | 1.1 | 72 | 0.6 | 0.079 | 1 | 0 | 0 |
| 15 | 73 | 115 | 39 | 143 | 1.9 | 91 | 0.8 | 0.057 | 1 | 1 | 1 |
| 16 | 74 | 112 | 26 | 102 | 2.5 | 90 | 1.1 | 0.05 | 1 | 0 | 0 |
| 17 | 75 | 93 | 10 | 138 | 0.9 | 79 | 1.1 | 0.092 | 1 | 0 | 0 |
| 18 | 76 | 100 | 25 | 145 | 3.5 | 64 | 0.8 | 0.033 | 1 | 0 | 0 |
| 19 | 77 | 102 | 31 | 137 | 3.4 | 84 | 1.5 | 0.095 | 1 | 0 | 0 |
| 20 | 78 | 90 | 41 | 104 | 3 | 63 | 1.6 | 0.051 | 1 | 0 | 0 |
| 21 | 79 | 125 | 18 | 114 | 1.1 | 90 | 0.5 | 0.095 | 1 | 1 | 0 |
| 22 | 80 | 127 | 11 | 139 | 2.5 | 96 | 1.1 | 0.08 | 1 | 1 | 0 |
| 23 | 81 | 88 | 28 | 120 | 4.9 | 72 | 1.6 | 0.08 | 1 | 0 | 0 |
| 24 | 82 | 122 | 5 | 145 | 0.8 | 60 | 0.9 | 0.056 | 1 | 0 | 0 |
| 25 | 83 | 102 | 22 | 138 | 2.3 | 82 | 1.2 | 0.038 | 1 | 0 | 0 |
| 26 | 84 | 98 | 18 | 118 | 5.2 | 72 | 1 | 0.066 | 1 | 0 | 0 |
| 27 | 85 | 106 | 25 | 113 | 2.4 | 72 | 1.4 | 0.044 | 1 | 0 | 0 |
| 28 | 86 | 96 | 32 | 134 | 4.2 | 77 | 1.8 | 0.037 | 1 | 0 | 0 |
| 29 | 87 | 118 | 9 | 115 | 2 | 78 | 1.3 | 0.098 | 1 | 0 | 0 |
| 30 | 88 | 106 | 36 | 126 | 2.9 | 91 | 1.5 | 0.064 | 1 | 0 | 0 |
| 31 | 89 | 111 | 11 | 123 | 3.2 | 82 | 1.1 | 0.057 | 1 | 0 | 0 |
| 32 | 90 | 110 | 28 | 129 | 3.8 | 78 | 1.3 | 0.06 | 1 | 0 | 0 |
| 33 | 91 | 87 | 40 | 131 | 0.7 | 61 | 1.3 | 0.051 | 1 | 0 | 0 |
| 34 | 92 | 99 | 7 | 108 | 4 | 83 | 1.7 | 0.059 | 1 | 0 | 0 |
| 35 | 93 | 100 | 49 | 127 | 3.3 | 69 | 0.9 | 0.052 | 1 | 0 | 0 |
| 36 | 94 | 115 | 20 | 133 | 2.1 | 67 | 0.9 | 0.066 | 1 | 0 | 0 |
| 37 | 95 | 103 | 47 | 112 | 3.4 | 82 | 1.2 | 0.025 | 1 | 0 | 0 |
| 38 | 96 | 106 | 51 | 143 | 5.5 | 95 | 0.9 | 0.066 | 1 | 1 | 1 |
| 39 | 97 | 94 | 28 | 105 | 2.8 | 83 | 1.1 | 0.081 | 1 | 1 | 0 |
| 40 | 98 | 102 | 50 | 147 | 2.3 | 69 | 1.5 | 0.051 | 1 | 1 | 1 |
| 41 | 99 | 113 | 39 | 121 | 0.5 | 85 | 1.2 | 0.056 | 1 | 0 | 0 |
| 42 | 100 | 83 | 27 | 126 | 2.1 | 64 | 0.7 | 0.046 | 1 | 0 | 0 |
| 43 | 101 | 98 | 35 | 125 | 3 | 80 | 1.3 | 0.043 | 1 | 0 | 0 |
| 44 | 102 | 104 | 7 | 145 | 4.3 | 91 | 1.5 | 0.066 | 1 | 1 | 0 |
| 45 | 103 | 86 | 15 | 119 | 3.4 | 76 | 1.2 | 0.027 | 1 | 0 | 0 |
| 46 | 104 | 106 | 33 | 118 | 2.5 | 82 | 0.5 | 0.06 | 1 | 0 | 0 |
| 47 | 105 | 125 | 47 | 114 | 2.3 | 54 | 1.6 | 0.038 | 1 | 0 | 0 |
| 48 | 106 | 126 | 33 | 118 | 4.2 | 50 | 0.7 | 0.074 | 1 | 0 | 0 |
| 49 | 107 | 95 | 22 | 129 | 3.5 | 71 | 1.4 | 0.053 | 1 | 0 | 0 |
| 50 | 108 | 120 | 14 | 132 | 0.6 | 95 | 0.5 | 0.011 | 1 | 0 | 0 |
| 51 | 109 | 121 | 21 | 133 | 5.2 | 57 | 1.1 | 0.041 | 1 | 1 | 1 |
| 52 | 110 | 95 | 6 | 103 | 0.6 | 70 | 0.6 | 0.071 | 0 | 0 | 0 |
| 53 | 111 | 104 | 31 | 128 | 3.1 | 73 | 1 | 0.057 | 0 | 0 | 0 |
| 54 | 112 | 124 | 19 | 120 | 1.1 | 54 | 1.8 | 0.074 | 1 | 0 | 0 |
| 55 | 113 | 99 | 30 | 116 | 3.3 | 75 | 1.7 | 0.066 | 1 | 0 | 0 |
| 56 | 114 | 128 | 31 | 104 | 1 | 96 | 1.8 | 0.076 | 1 | 0 | 0 |
| 57 | 115 | 104 | 6 | 134 | 5.5 | 83 | 0.7 | 0.016 | 1 | 0 | 0 |
| 58 | 116 | 115 | 18 | 127 | 2.7 | 98 | 1.5 | 0.044 | 1 | 0 | 0 |
| 59 | 117 | 110 | 18 | 118 | 1 | 85 | 1 | 0.026 | 1 | 0 | 0 |
| 60 | 118 | 106 | 15 | 116 | 1 | 92 | 2 | 0.09 | 1 | 0 | 0 |
| 61 | 119 | 117 | 6 | 111 | 4.9 | 74 | 1.5 | 0.03 | 1 | 0 | 0 |
| 62 | 120 | 90 | 43 | 131 | 5.1 | 69 | 1.3 | 0.05 | 1 | 0 | 0 |
| 63 | 121 | 109 | 20 | 114 | 3.6 | 56 | 1.8 | 0.036 | 1 | 0 | 0 |
| 64 | 122 | 92 | 22 | 101 | 2.5 | 78 | 0.5 | 0.014 | 0 | 0 | 0 |
| 65 | 123 | 112 | 38 | 122 | 4.8 | 63 | 1.6 | 0.033 | 1 | 0 | 0 |
| 66 | 124 | 90 | 26 | 119 | 1 | 73 | 1.5 | 0.065 | 1 | 0 | 0 |
| 67 | 125 | 101 | 6 | 126 | 5 | 59 | 1.8 | 0.08 | 1 | 0 | 0 |
| 68 | 126 | 92 | 37 | 144 | 3.6 | 70 | 1.4 | 0.066 | 1 | 0 | 0 |
| 69 | 127 | 125 | 12 | 124 | 4.7 | 88 | 1.9 | 0.089 | 1 | 0 | 0 |
| 70 | 128 | 115 | 13 | 119 | 2.8 | 68 | 1.8 | 0.066 | 1 | 0 | 0 |
| 71 | 129 | 81 | 7 | 148 | 4.1 | 60 | 1.4 | 0.031 | 1 | 0 | 0 |
| 72 | 130 | 118 | 38 | 108 | 1 | 65 | 1 | 0.035 | 1 | 0 | 0 |
| 73 | 131 | 117 | 50 | 114 | 1 | 70 | 1.6 | 0.084 | 1 | 1 | 1 |
| 74 | 132 | 123 | 31 | 149 | 1.2 | 51 | 1.7 | 0.041 | 1 | 0 | 0 |
| 75 | 133 | 106 | 15 | 121 | 0.9 | 82 | 1.8 | 0.041 | 1 | 0 | 0 |
| 76 | 134 | 90 | 35 | 118 | 5.4 | 76 | 0.5 | 0.031 | 1 | 0 | 0 |
| 77 | 135 | 96 | 20 | 142 | 5 | 84 | 1 | 0.047 | 1 | 0 | 0 |
| 78 | 136 | 112 | 48 | 132 | 0.8 | 60 | 1.2 | 0.037 | 1 | 0 | 0 |
| 79 | 137 | 121 | 31 | 125 | 5.2 | 65 | 1.5 | 0.084 | 1 | 0 | 0 |
| 80 | 138 | 117 | 52 | 102 | 1.2 | 99 | 0.7 | 0.018 | 1 | 0 | 0 |
| 81 | 139 | 108 | 37 | 147 | 5.1 | 62 | 1.1 | 0.053 | 1 | 1 | 1 |
| 82 | 140 | 83 | 44 | 118 | 1.9 | 58 | 1.7 | 0.093 | 1 | 0 | 0 |
| 83 | 141 | 86 | 31 | 111 | 4.4 | 75 | 1.1 | 0.05 | 1 | 0 | 0 |
| 84 | 142 | 111 | 14 | 102 | 4.8 | 98 | 0.5 | 0.019 | 1 | 0 | 0 |
| 85 | 143 | 121 | 27 | 144 | 2.6 | 89 | 1.3 | 0.054 | 1 | 0 | 0 |
| 86 | 144 | 100 | 35 | 121 | 1.5 | 77 | 1.1 | 0.065 | 1 | 0 | 0 |
| 87 | 145 | 106 | 25 | 122 | 5.4 | 80 | 1.2 | 0.037 | 1 | 0 | 0 |
| 88 | 146 | 100 | 42 | 128 | 1 | 77 | 0.8 | 0.03 | 1 | 1 | 0 |
| 89 | 147 | 127 | 14 | 110 | 0.6 | 71 | 1.2 | 0.054 | 1 | 0 | 0 |
| 90 | 148 | 104 | 45 | 144 | 4.2 | 91 | 0.6 | 0.022 | 0 | 0 | 1 |
| 91 | 149 | 106 | 44 | 133 | 4.6 | 59 | 1.6 | 0.071 | 1 | 0 | 0 |
| 92 | 150 | 92 | 50 | 124 | 2 | 75 | 1.8 | 0.063 | 1 | 0 | 0 |
| 93 | 151 | 113 | 45 | 140 | 2.9 | 83 | 1.3 | 0.041 | 1 | 0 | 0 |
| 94 | 152 | 101 | 35 | 104 | 3.2 | 55 | 0.9 | 0.043 | 1 | 0 | 0 |
| 95 | 153 | 103 | 37 | 129 | 2.4 | 66 | 1.9 | 0.039 | 1 | 0 | 0 |
| 96 | 154 | 118 | 35 | 142 | 3.3 | 57 | 1.5 | 0.04 | 1 | 0 | 0 |
| 97 | 155 | 94 | 12 | 148 | 1 | 63 | 0.8 | 0.046 | 1 | 0 | 0 |
| 98 | 156 | 114 | 32 | 122 | 2.4 | 79 | 1.3 | 0.067 | 1 | 0 | 0 |
| 99 | 157 | 109 | 34 | 143 | 1 | 70 | 1.2 | 0.073 | 1 | 0 | 0 |
| 100 | 158 | 98 | 18 | 128 | 2.5 | 87 | 1.2 | 0.064 | 1 | 0 | 0 |
| 101 | 159 | 102 | 26 | 121 | 3.4 | 75 | 1.2 | 0.044 | 1 | 0 | 0 |
| 102 | 160 | 126 | 29 | 107 | 3.7 | 88 | 1.5 | 0.076 | 1 | 0 | 0 |
| 103 | 161 | 129 | 5 | 133 | 3.3 | 71 | 0.9 | 0.023 | 1 | 1 | 1 |
| 104 | 162 | 117 | 28 | 144 | 3.9 | 79 | 1 | 0.033 | 1 | 0 | 0 |
| 105 | 163 | 112 | 39 | 108 | 4.8 | 92 | 1.7 | 0.037 | 1 | 1 | 0 |
| 106 | 164 | 87 | 6 | 128 | 2.5 | 67 | 2 | 0.076 | 1 | 0 | 0 |
| 107 | 165 | 108 | 25 | 130 | 3 | 80 | 1.7 | 0.041 | 1 | 0 | 0 |
| 108 | 166 | 115 | 33 | 116 | 4.5 | 79 | 0.6 | 0.021 | 1 | 0 | 0 |
| 109 | 167 | 128 | 49 | 128 | 5.6 | 96 | 1.7 | 0.098 | 1 | 1 | 1 |
| 110 | 168 | 119 | 25 | 143 | 0.8 | 65 | 0.9 | 0.022 | 1 | 1 | 1 |

## Claims

1. A method for machining ceramic materials by micro-Electrical-Discharge-Machining, comprising the steps of
- arranging a ceramic workpiece in a micro-EDM machine,
- setting technological parameters of the micro-EDM considering predefined machining properties,
- executing the machining of the ceramic workpiece by applying the set micro-EDM parameters,
**characterized by** the further steps of
before setting up the ceramic workpiece in the micro-EDM machine, performing a suitability analysis on a test piece having the same material as the workpiece,
during said analysis, determining the electrical conductivity of the test piece,
and if the analysed test piece has 10⁻²-10⁻⁶ ohm⁻¹cm⁻¹ electrical conductivity, then performing preliminary machining experiments on the test piece for forming at least one geometrical shape using no-load erosion voltage, maximum discharge current, frequency, impulse duration, discharge gap setting parameters chosen within predefined parameter ranges of the adjustable parameters of the micro-EDM machine,
evaluating the results of the preliminary machining experiment series from the aspect of at least one of a geometrical correctness and further selected quality measures,
based on the result of the evaluation, classifying the test pieces as machinable or non-machinable ones,
and if one or more test pieces were classified as machinable, defining and setting technical parameter ranges associated with the planned machining of the ceramic workpiece, and
executing the machining of the ceramic workpiece by applying a parameter set within the defined parameter ranges.

2. The method according to claim 1, **characterized in that** the forming at least one geometrical shape on the ceramic test piece comprises forming a geometrical shape comprising at least one slot, preferably a V shaped slot in the ceramic test piece.

3. The method according to claim 1 or 2, **characterized in that** during the preliminary machining series of the ceramic test piece for forming at least one geometrical shape comprising at least one slot in the ceramic test piece, setting the no-load erosion voltage parameter from the adjustable parameters of the micro-EDM machine within a setting range of 80-130 V.

4. The method according to claim 1 or 2, **characterized in that** during the preliminary machining series of the ceramic test piece for forming at least one geometrical shape comprising at least one slot in the ceramic test piece, setting the maximum discharge current parameter from the adjustable parameters of the micro-EDM machine within a setting range of 5-52 A.

5. The method according to claim 1 or 2, **characterized in that** during the preliminary machining series of the ceramic test piece for forming at least one geometrical shape comprising at least one slot in the ceramic test piece, setting the frequency parameter from the adjustable parameters of the micro-EDM machine within a setting range of 100-150 kHz.

6. The method according to claim 1 or 2, **characterized in that** during the preliminary machining series of the ceramic test piece for forming at least one geometrical shape comprising at least one slot in the ceramic test piece, setting the discharge duration parameter from the adjustable parameters of the micro-EDM machine within a setting range of 0.5-5.6 µs.

7. The method according to claim 1 or 2, **characterized in that** during the preliminary machining series of the ceramic test piece for forming at least one geometrical shape comprising at least one slot in the ceramic test piece, setting the discharge gap parameter from the adjustable parameters of the micro-EDM machine within a setting range of 50-119 V.

## Patentansprüche

1. Verfahren zur Bearbeitung von Keramikmaterialien durch Mikrofunkenerodieren (Mikro-EDM), umfassend:
- Anordnen eines Keramikwerkstücks in einer Mikro-EDM-Maschine,
- Einstellen der technologischen Parameter des Mikro-EDM unter Berücksichtigung vordefinierter Bearbeitungseigenschaften,
- Ausführen der Bearbeitung des Keramikwerkstücks durch Anwenden der eingestellten Mikro-EDM-Parameter,
**gekennzeichnet durch** die weiteren Schritte von
vor dem Einrichten des Keramikwerkstücks in der Mikro-EDM-Maschine, Durchführen einer Eignungsanalyse an einem Prüfstück aus dem gleichen Material wie das Werkstück;
Bestimmen der elektrischen Leitfähigkeit des Prüfstücks während der Analyse,
und falls das analysierte Prüfstück eine elektrische Leitfähigkeit von 10²-10⁻⁶ ohm⁻¹cm⁻¹ hat, Durchführen vorläufiger Bearbeitungsexperimente zur geometrischen Umformung des Prüfstückes mit mindestens einer räumlichen Gestalt unter Verwendung von Einstellparametern zur Leerlaufspannung, maximalem Entladestrom, Frequenz, Impulsdauer, Entladungsspalt, die innerhalb vordefinierter Parameterbereiche der einstellbaren Parameter der Mikro-EDM-Maschine gewählt wurden,
Bewerten der Ergebnisse der vorläufigen Bearbeitungsexperimentreihen unter mindestens einem Gesichtspunkt der geometrischen Wiedergabetreue und weiterer ausgewählter Qualitätsmerkmale;
anhand der Ergebnisse der Bewertung, Klassifizieren der Prüfstücke als bearbeitbar oder nicht bearbeitbar,
und falls ein oder mehrere Prüfstücke als bearbeitbar klassifiziert wurden, Bestimmen und Einstellen der technischen Parameterbereiche, die mit der geplanten Bearbeitung des Keramikwerkstücks verknüpft sind, und
Ausführen der Bearbeitung des Keramikwerkstücks durch Anwenden eines Parametersatzes innerhalb der definierten Parameterbereiche.

2. Verfahren nach Anspruch 1, **dadurch gekennzeichnet, dass** das Ausbilden mindestens einer geometrischen Form auf dem Keramikprüfstück das Ausbilden einer geometrischen Form umfasst, die mindestens eine Rille, vorzugsweise eine V-förmige Rille in dem Keramikteststück umfasst.

3. Verfahren nach Anspruch 1 oder 2, **dadurch gekennzeichnet, dass** während der vorläufigen Bearbeitungsexperimente des Keramikprüfstücks zur Ausbildung einer geometrischen Form mit mindestens einer Rille der Leerlaufspannungsparameter unter den einstellbaren Parametern der Mikro-EDM-Maschine in einem Einstellbereich von 80-130 V eingestellt wird.

4. Verfahren nach Anspruch 1 oder 2, **dadurch gekennzeichnet, dass** während der vorläufigen Bearbeitungsexperimente des Keramikprüfstücks zur Ausbildung einer geometrischen Form mit mindestens einer Rille der maximale Entladestrom unter den einstellbaren Parametern der Mikro-EDM-Maschine in einem Einstellbereich von 5-52 A eingestellt wird.

5. Verfahren nach Anspruch 1 oder 2, **dadurch gekennzeichnet, dass** während vorläufigen Bearbeitungsexperimente des Keramikprüfstücks zur Ausbildung einer geometrischen Form mit mindestens einer Rille die Frequenz unter den einstellbaren Parametern der Mikro-EDM-Maschine in einem Einstellbereich von 100-150 kHz eingestellt wird.

6. Verfahren nach Anspruch 1 oder 2, **dadurch gekennzeichnet, dass** während vorläufigen Bearbeitungsexperimente des Keramikprüfstücks zur Ausbildung einer geometrischen Form mit mindestens einer Rille die Impulsdauer unter den einstellbaren Parametern der Mikro-EDM-Maschine in einem Einstellbereich von 0.5-5.6 µs eingestellt wird.

7. Verfahren nach Anspruch 1 oder 2, **dadurch gekennzeichnet, dass** während vorläufigen Bearbeitungsexperimente des Keramikprüfstücks zur Ausbildung einer geometrischen Form mit mindestens einer Rille der Entladungsspalt unter den einstellbaren Parametern der Mikro-EDM-Maschine in einem Einstellbereich von 50-119 V eingestellt wird.

## Revendications

1. Procédé d'usinage de matériaux céramiques par micro-usinage par décharge électrique, comprenant les étapes de
- disposer une pièce en céramique dans une machine micro-EDM,
- fixant des paramètres technologiques du micro-EDM en tenant compte des propriétés d'usinage prédéfinies,
- exécuter l'usinage de la pièce en céramique en appliquant les paramètres micro-EDM définis,
**caractérisé par** les étapes supplémentaires de
avant de mettre en place la pièce en céramique dans la machine micro-EDM, effectuer une analyse d'aptitude sur une éprouvette ayant le même matériau que la pièce,
lors de ladite analyse, déterminer la conductivité électrique de l'éprouvette,
et si l'éprouvette analysée a une conductivité électrique de 10-2-10-6 ohm⁻¹cm⁻¹, effectuer des expériences d'usinage préliminaires sur l'éprouvette pour former au moins une forme géométrique en utilisant la tension d'érosion à vide, le courant de décharge maximal, la fréquence , durée d'impulsion, paramètres de réglage de l'écart de décharge choisis dans des plages de paramètres prédéfinies des paramètres ajustables de la machine micro-EDM,
évaluer les résultats de la série d'expériences d'usinage préliminaires sous l'aspect au moins l'un de l'exactitude géométrique et d'autres mesures de qualité sélectionnées,
sur la base du résultat de l'évaluation, classant les éprouvettes comme usinables ou non usinables,
et si une ou plusieurs éprouvettes ont été classées comme usinables, définir et fixant des plages de paramètres techniques associées à l'usinage prévu de la pièce en céramique, et
exécuter l'usinage de la pièce en céramique en appliquant un jeu de paramètres dans les plages de paramètres définies.

2. Procédé selon la revendication 1, **caractérisé en ce que** la formation d'au moins une forme géométrique sur l'éprouvette céramique comprend la formation d'une forme géométrique comprenant au moins une fente, de préférence une fente en forme de V dans l'éprouvette céramique.

3. Procédé selon la revendication 1 ou 2, **caractérisé en ce que** lors de la série d'usinage préalable de l'éprouvette céramique pour former au moins une forme géométrique comportant au moins une fente dans l'éprouvette céramique, fixant le paramètre de tension d'érosion à vide des paramètres réglables de la machine micro-EDM dans une plage de réglage de 80-130 V.

4. Procédé selon la revendication 1 ou 2, **caractérisé en ce que** lors de la série d'usinage préliminaire de l'éprouvette céramique pour former au moins une forme géométrique comprenant au moins une fente dans l'éprouvette céramique, fixant le paramètre de courant de décharge maximal à partir de la paramètres réglables de la machine micro-EDM dans une plage de réglage de 5-52 A.

5. Procédé selon la revendication 1 ou 2, **caractérisé en ce que** lors de la série d'usinage préalable de l'éprouvette céramique pour former au moins une forme géométrique comprenant au moins une fente dans l'éprouvette céramique, fixant le paramètre de fréquence à partir des paramètres ajustables de la machine micro-EDM dans une plage de réglage de 100-150 kHz.

6. Procédé selon la revendication 1 ou 2, **caractérisé en ce que** lors de la série d'usinage préliminaire de l'éprouvette céramique pour former au moins une forme géométrique comprenant au moins une fente dans l'éprouvette céramique, fixant le paramètre de durée de décharge à partir du réglable paramètres de la machine micro-EDM dans une plage de réglage de 0,5-5,6 µs.

7. Procédé selon la revendication 1 ou 2, **caractérisé en ce que** lors de la série d'usinage préliminaire de l'éprouvette en céramique pour former au moins une forme géométrique comprenant au moins une fente dans l'éprouvette céramique, fixant le paramètre d'écart de décharge à partir du réglable paramètres de la machine micro-EDM dans une plage de réglage de 50-119 V.
